# EUROPEAN PATENT SPECIFICATION

(11) **EP 3 946 868 B1**
(45) Date of publication and mention of the grant of the patent: **23.10.2024**
(21) Application number: 19923193.7
(22) Date of filing: 29.03.2019
(51) Int. Cl.: B29B 9/12, B29B 9/16, C08J 3/24, C08K 5/14, C08K 5/3492, C08K 5/54, C08K 5/5419, B29C 48/00, B29C 48/345, B29C 48/04, B29C 48/05, B29C 48/40, B29C 48/80, B29C 48/86

(54) **PELLET CONTAINING AT LEAST AN ADDITIVE IN A CHANNEL, AND RELATED METHOD**
PELLET ENTHALTEND ZUMINDEST EIN ADDITIV IN EINEM KANAL, UND DARAUF BEZOGENES VERFAHREN
PASTILLE CONTENANT AU MOINS D'UN ADDITIF DANS UN CANAL, ET PROCÉDÉ ASSOCIÉ

(43) Date of publication of application: 09.02.2022
(73) Proprietor: Dow Global Technologies LLC, Midland, MI 48674 (US)
(72) Inventor: GOU, Qian, Collegeville, Pennsylvania 19426 (US); SUN, Yabin, Shanghai 201203 (CN); MA, Weiming, Shanghai 201203 (CN); ESSEGHIR, Mohamed, Collegeville, Pennsylvania 19426 (US); HUANG, Wenyi, Midland, Michigan 48674 (US); COGEN, Jeffrey M., Collegeville, Pennsylvania 19426 (US)
(74) Representative: Boult Wade Tennant LLP
(86) International application number: PCT/CN2019/080378
(87) International publication number: WO 2020/198919

(56) References cited:
- EP-A1- 1 772 250
- WO-A1-2017/023755
- WO-A1-2020/198920
- WO-A1-2020/198921
- CN-A- 1 816 435
- CN-A- 108 822 314
- JP-A- 2000 351 117
- US-A1- 2014 011 912
- US-A1- 2018 163 010
- US-A1- 2018 222 087

## Description

### BACKGROUND

Crosslinked polyethylene (XLPE) is widely used for high voltage insulation in power transmission systems. One way to produce XLPE is by way of a silane/moisture cure process. In a silane/moisture cure process, silane is grafted onto polyethylene in a reactive extrusion procedure in the presence of peroxide initiator. The resulting silane-grafted resin produces silane crosslinked polyethylene.

Drawbacks to the silane/moisture cure process include the environmental, health, and safety hazards associated with the handling and use of silane and peroxide. In addition, peroxide crosslinking of polyethylene generates by-products due to the decomposition of the peroxide. For example, dicumyl peroxide (DCP), a common crosslinking agent, typically decomposes and generates methane, acetophenone, and cumyl alcohol during polyethylene crosslinking. These crosslink by-products can deleteriously impact the electrical properties of XPLE power cables.

The art recognizes the on-going need to reduce the amount of peroxide and/or silane during the silane/moisture cure procedure for the crosslinking of olefin-based polymers and the crosslinking of polyethylene in particular.

US 2018/222087 A1 relates to stabilizer compositions for providing protection to organic polymers (plastics) against deleterious effects from air (oxygen), residual catalyst, mechanical stress, heat, and light. EP 1772250 A1 relates to extrusion equipment for multilayer extrusions employed for production of multilayer extrusions each having such a core-sheath structure that a core material is covered with a sheath material on the outer periphery thereof and a process for production of multilayer extrusions with the same. Co-pending application WO 2020/198920 A1 relates to hollow pellets and method of soaking, and further co-pending application WO 2020/198921 A1 relates to a die assembly for producing fluid-filled pellets.

### SUMMARY

In a first aspect the invention provides a pellet of claim 1. The pellet includes: a body having a first end and an opposing second end. The body is composed of a polymeric material. The body has a length, a body diameter and a channel. The channel has a channel diameter, the channel extends through the body from the first end to the second end. An additive in is the channel. The additive comprises a material having at least one C-Si-O group, wherein the material having at least one C-Si-O group is a siloxane, wherein the siloxane is polydimethylsiloxane.
In a further aspect the invention provides a process of claim 11. The process includes forming a pellet in a melt state, the pellet having a body, the body having a first end and an opposing second end. The body is composed of a polymeric material. The body has a length and a body diameter. The pellet has a channel extending through the body from the first end to the second end. The process includes injecting an additive into the channel while the additive is in a fluid state. The process includes solidifying the pellet and forming a loaded pellet where the loaded pellet has the additive in the channel. The process comprises injecting an additive that is in a fluid state into the channel, the additive comprising a material having at least one C-Si-O group; and forming a loaded pellet with the material having at least one C-Si-O group in the channel, wherein the material having at least one C-Si-O group is a siloxane, wherein the siloxane is polydimethylsiloxane.

### BRIEF DESCRIPTION OF THE DRAWINGS

FIG. 1A is a perspective view of pellets having a channel extending through the pellet body and an additive in channel, in accordance with an embodiment of the present disclosure.
FIG. 1B is a perspective view of a hollow pellet with additive in the channel, in accordance with an embodiment of the present disclosure.
FIG. 2A is a cross-sectional view of the pellet as viewed along line 2A-2A of FIG. 1B.
FIG. 2B is a cross-sectional view of the pellet as viewed along line 2B-2B of FIG. 1B.
FIG. 3 is an exploded view of the pellet of FIG. 1B.
FIG. 4A is a perspective view of a closed pellet, in accordance with an embodiment of the present disclosure.
FIG. 4B is a cross-sectional view of the closed pellet with additive in the channel as viewed along line 4B-4B of FIG. 4A.

### DEFINITIONS

The numerical ranges disclosed herein include all values from, and including, the lower value and the upper value. For ranges containing explicit values (e.g., 1, or 2, or 3 to 5, or 6, or 7) any subrange between any two explicit values is included (e.g., 1 to 2; 2 to 6; 5 to 7; 3 to 7; 5 to 6; etc.).

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, (whether polymerized or otherwise), unless stated to the contrary. In contrast, the term, "consisting essentially of" excludes from the scope of any succeeding recitation any other component, step, or procedure, excepting those that are not essential to operability. The term "consisting of" excludes any component, step, or procedure not specifically delineated or listed. The term "or," unless stated otherwise, refers to the listed members individually as well as in any combination. Use of the singular includes use of the plural and vice versa.

Unless stated to the contrary, implicit from the context, or customary in the art, all parts and percentages are based on weight and all test methods are current as of the filing date of this disclosure.

"Blend," "polymer blend" and like terms refer to a combination of two or more polymers. Such a blend may or may not be miscible. Such a combination may or may not be phase separated. Such a combination may or may not contain one or more domain configurations, as determined from transmission electron spectroscopy, light scattering, x-ray scattering, and any other method known in the art.

"Ethylene-based polymer" is a polymer that contains more than 50 weight percent polymerized ethylene monomer (based on the total amount of polymerizable monomers) and, optionally, may contain at least one comonomer. Ethylene-based polymer includes ethylene homopolymer, and ethylene copolymer (meaning units derived from ethylene and one or more comonomers). The terms "ethylene-based polymer" and "polyethylene" may be used interchangeably. Nonlimiting examples of ethylene-based polymer (polyethylene) include low density polyethylene (LDPE) and linear polyethylene. Nonlimiting examples of linear polyethylene include linear low density polyethylene (LLDPE), ultra-low density polyethylene (ULDPE), very low density polyethylene (VLDPE), multi-component ethylene-based copolymer (EPE), ethylene/α-olefin multi-block copolymers (also known as olefin block copolymer (OBC)), single-site catalyzed linear low density polyethylene (m-LLDPE), substantially linear, or linear, plastomers/elastomers, medium density polyethylene (MDPE), and high density polyethylene (HDPE). Generally, polyethylene may be produced in gas-phase, fluidized bed reactors, liquid phase slurry process reactors, or liquid phase solution process reactors, using a heterogeneous catalyst system, such as Ziegler-Natta catalyst, a homogeneous catalyst system, comprising Group 4 transition metals and ligand structures such as metallocene, non-metallocene metal-centered, heteroaryl, heterovalent aryloxyether, phosphinimine, and others. Combinations of heterogeneous and/or homogeneous catalysts also may be used in either single reactor or dual reactor configurations. In an embodiment, the ethylene-based polymer does not contain an aromatic comonomer polymerized therein.

"Ethylene plastomers/elastomers" are substantially linear, or linear, ethylene/α-olefin copolymers containing homogeneous short-chain branching distribution comprising units derived from ethylene and units derived from at least one C₃-C₁₀ α-olefin comonomer, or at least one C₄-C₈ α-olefin comonomer, or at least one C₆-C₈ α-olefin comonomer. Ethylene plastomers/elastomers have a density from 0.870 g/cc, or 0.880 g/cc, or 0.890 g/cc to 0.900 g/cc, or 0.902 g/cc, or 0.904 g/cc, or 0.909 g/cc, or 0.910 g/cc, or 0.917 g/cc. Nonlimiting examples of ethylene plastomers/elastomers include AFFINITY^{™} plastomers and elastomers (available from The Dow Chemical Company), EXACT^{™} Plastomers (available from ExxonMobil Chemical), Tafmer^{™} (available from Mitsui), Nexlene^{™} (available from SK Chemicals Co.), and Lucene^{™} (available LG Chem Ltd.).

"High density polyethylene" (or "HDPE") is an ethylene homopolymer or an ethylene/α-olefin copolymer with at least one C₄-C₁₀ α-olefin comonomer, or C₄-C₈ α-olefin comonomer and a density from greater than 0.94 g/cc, or 0.945 g/cc, or 0.95 g/cc, or 0.955 g/cc to 0.96 g/cc, or 0.97 g/cc, or 0.98 g/cc. The HDPE can be a monomodal copolymer or a multimodal copolymer. A "monomodal ethylene copolymer" is an ethylene/C₄-C₁₀ α-olefin copolymer that has one distinct peak in a gel permeation chromatography (GPC) showing the molecular weight distribution. A "multimodal ethylene copolymer" is an ethylene/C₄-C₁₀ α-olefin copolymer that has at least two distinct peaks in a GPC showing the molecular weight distribution. Multimodal includes copolymer having two peaks (bimodal) as well as copolymer having more than two peaks. Nonlimiting examples of HDPE include DOW^{™} High Density Polyethylene (HDPE) Resins, ELITE^{™} Enhanced Polyethylene Resins, and CONTINUUM^{™} Bimodal Polyethylene Resins, each available from The Dow Chemical Company; LUPOLEN^{™}, available from LyondellBasell; and HDPE products from Borealis, Ineos, and ExxonMobil.

An "interpolymer" (or "copolymer"), is a polymer prepared by the polymerization of at least two different monomers. This generic term includes copolymers, usually employed to refer to polymers prepared from two different monomers, and polymers prepared from more than two different monomers, e.g., terpolymers, tetrapolymers, etc.

"Low density polyethylene" (or "LDPE") consists of ethylene homopolymer, or ethylene/α-olefin copolymer comprising at least one C₃-C₁₀ α-olefin, preferably C₃-C₄ that has a density from 0.915 g/cc to 0.940 g/cc and contains long chain branching with broad MWD. LDPE is typically produced by way of high pressure free radical polymerization (tubular reactor or autoclave with free radical initiator). Nonlimiting examples of LDPE include MarFlex^{™} (Chevron Phillips), LUPOLEN^{™} (LyondellBasell), as well as LDPE products from Borealis, Ineos, ExxonMobil, and others.

"Linear low density polyethylene" (or "LLDPE") is a linear ethylene/α-olefin copolymer containing heterogeneous short-chain branching distribution comprising units derived from ethylene and units derived from at least one C₃-C₁₀ α-olefin comonomer or at least one C₄-C₈ α-olefin comonomer, or at least one C₆-C₈ α-olefin comonomer. LLDPE is characterized by little, if any, long chain branching, in contrast to conventional LDPE. LLDPE has a density from 0.910 g/cc, or 0.915 g/cc, or 0.920 g/cc, or 0.925 g/cc to 0.930 g/cc, or 0.935 g/cc, or 0.940 g/cc. Nonlimiting examples of LLDPE include TUFLIN^{™} linear low density polyethylene resins and DOWLEX^{™} polyethylene resins, each available from the Dow Chemical Company; and MARLEX^{™} polyethylene (available from Chevron Phillips).

"Multi-component ethylene-based copolymer" (or "EPE") comprises units derived from ethylene and units derived from at least one C₃-C₁₀ α-olefin comonomer, or at least one C₄-C₈ α-olefin comonomer, or at least one C₆-C₈ α-olefin comonomer, such as described in patent references USP 6,111,023; USP 5,677,383; and USP 6,984,695. EPE resins have a density from 0.905 g/cc, or 0.908 g/cc, or 0.912 g/cc, or 0.920 g/cc to 0.926 g/cc, or 0.929 g/cc, or 0.940 g/cc, or 0.962 g/cc. Nonlimiting examples of EPE resins include ELITE^{™} enhanced polyethylene and ELITE AT^{™} advanced technology resins, each available from The Dow Chemical Company; SURPASS^{™} Polyethylene (PE) Resins, available from Nova Chemicals; and SMART^{™}, available from SK Chemicals Co.

An "olefin-based polymer" or "polyolefin" is a polymer that contains more than 50 weight percent polymerized olefin monomer (based on total amount of polymerizable monomers), and optionally, may contain at least one comonomer. Nonlimiting examples of an olefin-based polymer include ethylene-based polymer and propylene-based polymer. An "olefin" and like terms refers to hydrocarbons consisting of hydrogen and carbon whose molecules contain a pair of carbon atoms linked together by a double bond.

A "polymer" is a compound prepared by polymerizing monomers, whether of the same or a different type, that in polymerized form provide the multiple and/or repeating "units" or "mer units" that make up a polymer. The generic term polymer thus embraces the term "homopolymer," usually employed to refer to polymers prepared from only one type of monomer, but not at the exclusion of residual amounts of other components used in preparing the homopolymer, such as chain transfer agents. The term "copolymer," usually employed to refer to polymers prepared from at least two types of monomers. It also embraces all forms of copolymer, e.g., random, block, etc. The terms "ethylene/α-olefin polymer" and "propylene/α-olefin polymer" are indicative of copolymer as described above prepared from polymerizing ethylene or propylene respectively and one or more additional, polymerizable α-olefin monomer. It is noted that although a polymer is often referred to as being "made of" one or more specified monomers, "based on" a specified monomer or monomer type, "containing" a specified monomer content, or the like, in this context the term "monomer" is understood to be referring to the polymerized remnant of the specified monomer and not to the unpolymerized species. In general, polymers herein are referred to has being based on "units" that are the polymerized form of a corresponding monomer.

"Single-site catalyzed linear low density polyethylenes" (or "m-LLDPE") are linear ethylene/α-olefin copolymers containing homogeneous short-chain branching distribution comprising units derived from ethylene and units derived from at least one C₃-C₁₀ α-olefin comonomer, or at least one C₄-C₈ α-olefin comonomer, or at least one C₆-C₈ α-olefin comonomer. m-LLDPE has density from 0.913 g/cc, or 0.918 g/cc, or 0.920 g/cc to 0.925 g/cc, or 0.940 g/cc. Nonlimiting examples of m-LLDPE include EXCEED^{™} metallocene PE (available from ExxonMobil Chemical), LUFLEXEN^{™} m-LLDPE (available from LyondellBasell), and ELTEX^{™} PF m-LLDPE (available from Ineos Olefins & Polymers).

"Ultra low density polyethylene" (or "ULDPE") and "very low density polyethylene" (or "VLDPE") each is a linear ethylene/α-olefin copolymer containing heterogeneous short-chain branching distribution comprising units derived from ethylene and units derived from at least one C₃-C₁₀ α-olefin comonomer, or at least one C₄-C₈ α-olefin comonomer, or at least one C₆-C₈ α-olefin comonomer. ULDPE and VLDPE each has a density from 0.885 g/cc, or 0.90 g/cc to 0.915 g/cc. Nonlimiting examples of ULDPE and VLDPE include ATTANE^{™} ULDPE resins and FLEXOMER^{™} VLDPE resins, each available from The Dow Chemical Company.

"Melt blending" is a process in which at least two components are combined or otherwise mixed together, and at least one of the components is in a melted state. The melt blending may be accomplished by one or more of various know processes, e.g., batch mixing, extrusion blending, extrusion molding, and the like. "Melt blended" compositions are compositions which were formed through the process of melt blending.

"Thermoplastic polymer" and like terms refers to a linear or branched polymer that can be repeatedly softened and made flowable when heated and returned to a hard state when cooled to room temperature. A thermoplastic polymer typically has an elastic modulus greater than 68.95 MPa (10,000 psi) as measured in accordance with ASTM D638-72. In addition, a thermoplastic polymer can be molded or extruded into an article of any predetermined shape when heated to the softened state.

"Thermoset polymer", "thermosetting polymers" and like terms indicate that once cured, the polymer cannot be softened nor further shaped by heat. Thermosetting polymers, once cured, are space network polymers and are highly crosslinked to form rigid three-dimensional molecular structures.

### DETAILED DESCRIPTION

The present disclosure provides a pellet. The pellet includes a body that is composed of a polymeric material. The body has a first end and a second end located on an opposite side of the body. The body includes a length and a diameter. The body has a channel having a channel diameter. The channel extends through the body from the first end to the second end. An additive is located in the channel. The additive comprises a material having at least one C-Si-O group, wherein the material having at least one C-Si-O group is a siloxane, wherein the siloxane is polydimethylsiloxane.

### Pellet

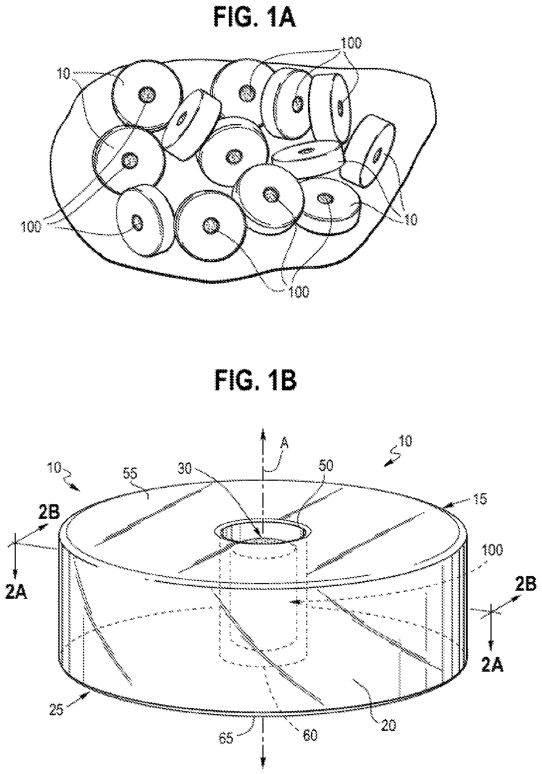

Referring to the drawings and initially to FIG. 1A, a plurality of pellets of the present disclosure is shown. FIG. 1B shows an individual pellet 10, pellet 10 includes a body 20. The body 20 includes a first end 15 and a second end 25. Pellet 10 includes a channel 30. Channel 30 extends through the body 20 from the first end 15 to the second end 25. Pellet 10 with body 20 and channel 30 extending therethrough is hereafter interchangeably referred to as a "hollow pellet."

The body 20 has a cylindrical shape. The body 20 includes the first end 15 and the second end 25, the ends having a circular shape. The first end 15 and the second end 25 are located on opposite side of the body 20. An axis of symmetry A is located at the center of circles formed by the ends 15 and 25. Pellet 10 includes a channel 30 that is parallel to the axis of symmetry A. The channel 30 has a cylindrical shape, or a generally cylindrical shape, and is located in the center of the body 20. The channel 30 spans the entire length of the body 20. Channel 30 extends from the first end 15 to the second end 25.

Body 20 has a circular, or a generally circular, cross-sectional shape. Body 20 also has a cylindrical, or a generally cylindrical shape. It is understood that the circular, cross-sectional shape of the body 20 can be altered (*i.e*., squeezed, pressed or packed), due to forces imparted upon the pellet 10 during industrial scale production and/or handling of the pellet while the pellet is still in a melted state. Consequently, the cross-sectional shape of the body 20 may be more elliptical in shape than circular in shape, thus the definition of "generally circular in cross-sectional shape."

The body 20 and the channel 30 each has a respective diameter - body diameter 40 and channel diameter 45. The term, "diameter," as used herein, is the greatest length between two points on body/channel surface that extends through the center, through axis of symmetry A, of the body/channel. In other words, when the pellet 10 has an elliptical shape (as opposed to a circular shape), the diameter is the major axis of the ellipse. In an embodiment, the shape of the body 20 resembles a hockey puck.

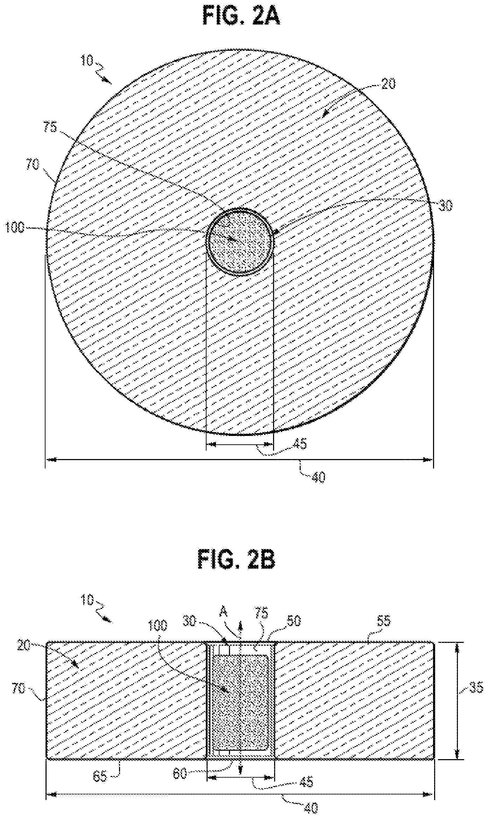

FIG. 2A shows a body diameter 40 and a channel diameter 45 for the pellet 10. In an embodiment, the body diameter 40 is from 0.7 millimeters (mm), or 0.8 mm, or 0.9 mm, or 1.0 mm, or 1.5 mm to 3.7 mm, or 4.0 mm, or 4.2 mm, or 4.6 mm, or 5.0 mm. In a further embodiment, the body diameter 40 is from 0.7 to 5.0 mm, or from 0.8 to 4.2 mm, or from 1.0 to 4.0 mm. In an embodiment, the channel diameter 45 is from 0.10 mm, or 0.13 mm, or 0.15 mm, or 0.18 mm to 0.3 mm, or 0.4 mm, or 0.5 mm, or 0.6 mm, or 0.8 mm or 1 mm, or 1.6 mm, or 1.8 mm. In a further embodiment, the channel diameter 45 is from 0.10 to 1.8 mm, or from 0.15 to 1.6 mm, or from 0.18 to 1 mm, or from 0.18 to 0.8 mm, or from 0.18 to 0.6 mm.

### Additive

An additive 100 is present in the channel 30 as shown in FIGS. 1A, 1B, 2A, 2B, and 4B.

The additive 100 includes a material having at least one C-Si-O group. The term, "C-Si-O group," as used herein, is a moiety within an organic molecule having a carbon atom covalently bonded to a silicon atom, the silicon atom covalently bonded to an oxygen atom.

The material having at least one C-Si-O group is a siloxane.

The siloxane is polydimethylsiloxane (PDMS).

In an embodiment, the additive further comprises a silane. The silane is a hydrolysable silane having the following Structure (A): 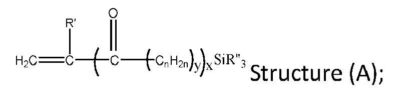 wherein R' is a hydrogen atom or methyl group; x and y are 0 or 1 with the proviso that when x is 1, y is 1; n is an integer from 1 to 12 inclusive, or n is an integer from 1 to 4, and each R^{"} independently is a hydrolysable organic group such as an alkoxy group having from 1 to 12 carbon atoms (e.g., methoxy, ethoxy, butoxy), aryloxy group (e.g., phenoxy), araloxy group (e.g., benzyloxy), aliphatic acyloxy group having from 1 to 12 carbon atoms (e.g., formyloxy, acetyloxy, propanoyloxy), amino or substituted amino groups (alkylamino, arylamino), or a lower alkyl group having 1 to 6 carbon atoms inclusive, with the proviso that at least one of the three "R^{"} groups forms an Si-O bond with the silicon atom.

Nonlimiting examples of suitable hydrolysable silane include silanes that have an ethylenically unsaturated hydrocarbyl group, such as vinyl, allyl, isopropenyl, butenyl, cyclohexenyl or gamma-(meth)acryloxy allyl group, and a hydrolysable group, such as, for example, a hydrocarbyloxy, hydrocarbonyloxy, or hydrocarbylamino group. Examples of hydrolysable groups include methoxy, ethoxy, formyloxy, acetoxy, propionyloxy, and alkyl or arylamino groups.

In an embodiment, the hydrolysable silane is an unsaturated alkoxy silane such as vinyl trimethoxy silane (VTMS), vinyl triethoxy silane, vinyl triacetoxy silane, gamma-(meth)acryloxy, propyl trimethoxy silane, and mixtures of these silanes.

In an embodiment, the additive 100 includes a peroxide, a silane, a catalyst, a curing coagent, an antioxidant, an azo compound, a flame retardant, a metal deactivator, a UV stabilizer, a voltage stabilizer, a water tree retardant, or combinations thereof.

Nonlimiting examples of suitable peroxide include cumene hydroperoxide, dicumyl peroxide (DCP), isopropylcumyl t-butyl peroxide, t-butyl cumylperoxide, isopropyl cumylperoxide, di(isopropylcumyl) peroxide, di-t-amyl peroxide (DTAP), di-t-butyl peroxide, benzoyl peroxide, lauryl peroxide, methyl ethyl ketone peroxide, bis(1,1-dimethylethyl) peroxide, bis(1,1-dimethylpropyl) peroxide, t-butyl peracetate, t-butyl peroctoate, t-butyl peroxybenzoate, 2,5-dimethyl-2,5-bis(1,1-dimethylethylperoxy) hexane, 2,5-dimethyl-2,5-bis(1,1-dimethylethylperoxy) hexyne, 2,5-bis(t-butyl peroxy)-2,5-dimethylhexane, 2,5-bis(t-butyl peroxy)-2,5-dimethylhexyne, 3,1,1-bis(t-butyl peroxy)-3,3,5-trimethylcyclohexane, 1,1-bis(1,1-dimethylethylperoxy)-3,3,5-trimethylcyclohexane, bis(α-t-butyl-peroxyisopropyl) benzene (BIPB), butyl 4,4-di(tert-butylperoxy) valerate, and 4,4-bis(1,1-dimethylethylperoxy) valeric acid.

Nonlimiting examples of suitable catalyst include coordination complexes comprising tin and an organic ligand, such as dialkyltin dicarboxylates. In an embodiment, the dialkyltin dicarboxylate is a di((C₁-C₁₀)alkyl)tin dicarboxylate, a dialkyltin di(C₈-C₁₈)carboxylate, a di((C₁-C₁₀)alkyl)tin di(C₈-C₁₈)carboxylate, a di((C₃-C₅)alkyl)tin di(C₁₀-C₁₄)carboxylate, a di((C₄)alkyl)tin di(C₁₂)carboxylate, or a combination thereof. In a further embodiment, the dialkyltin dicarboxylate is dibutyltin dilaurate.

Nonlimiting examples of suitable curing coagent include 2-allylphenyl allyl ether; 4-isopropenyl-2,6-dimethylphenyl allyl ether; 2,6-dimethyl-4-allylphenyl allyl ether; 2-methoxy-4-allylphenyl allyl ether; 2,2'-diallyl bisphenol A; O,O'-diallyl bisphenol A (or tetramethyl diallylbisphenol A); 2,4-diphenyl-4-methyl-1-pentene (or 1,3-diisopropenylbenzene)', triallyl isocyanurate ("TAlC"); triallyl cyanurate ("TAC"), triallyl trimellitate ("TATM"); N,N,N',N',N",N"-hexaallyl-1,3,5-triazine-2,4,6-triamine ("HATATA"), (also known as N2,N2,N4,N4,N6,N6-hexaallyl-1,3,5-triazine-2,4,6-triamine); triallyl orthoformate; pentaerythritol triallyl ether; triallyl citrate (or triallyl aconitate); trimethylolpropane triacrylate ("TMPTA"); trimethylolpropane trimethylacrylate ("TMPTMA"); ethoxylated bisphenol A dimethacrylate; 1,6-hexanediol diacrylate; pentaerythritol tetraacrylate; dipentaerythritol pentaacrylate; tris(2-hydroxyethyl) isocyanurate triacrylate; propoxylated glyceryl triacrylate; trimethylallyl isocyanurate (TMAIC); N,N-m-phenylene dimaleimide; and zinc dimethacrylate.

Nonlimiting examples of suitable antioxidant include bis(4-(1-methyl-1-phenylethyl)phenyl)amine, 2,2'-methylene-bis(4-methyl-6-t-butylphenol), 2,2'-thiobis(2-t-butyl-5-methylphenol, 4,4'-thiobis(2-t-butyl-5-methylphenol) (or 4,4'-thiobis(6-tert-butyl-m-cresol), 2,2'-thiobis(6-t-butyl-4-methylphenol, tris[(4-tert-butyl-3-hydroxy-2,6-dimethylphenyl)methyl]-1,3,5-triazine-2,4,6-trione, pentaerythritol tetrakis(3-(3,5-bis(1,1-dimethylethyl)-4-hydroxyphenyl)propionate, 3,5-bis(1,1-dimethylethyl)-4-hydroxybenzenepropanoic acid, 2,2'-thiodiethanediyl ester, distearyl thiodipropionate ("DSTDP"), dilauryl thiodipropionate, stearyl 3-(3,5-di-t-butyl-4-hydroxyphenyl)propionate, 2,4-bis(dodecylthiomethyl)-6-methylphenol, 4,6-bis(octylthiomethyl)-o-cresol, 2',3-bis[[3-[3,5-di-tert-butyl-4-hydroxyphenyl]propionyl]] propionohydrazide, 4,4'-bis-(α,α - dimethylbenzyl) diphenylamine, and sulfanediyldiethane-2,1-diyl-bis[3-(3,5-di-tert-butyl-4-hydroxyphenyl)propanoate].

A nonlimiting example of a suitable azo compound is 2,2-azobisisobutyronitrile.

In an embodiment, the additive is an additive blend. The additive blend includes two or more additives as described herein.

In an embodiment, the additive blend includes a carrier. Nonlimiting examples of suitable carrier include olefin-based polymer, wax, and a combination thereof. The two or more additives of the additive blend are dispersed homogenously throughout the carrier.

In an embodiment, the carrier includes a solidifier.

In an embodiment, the solidifier is a nucleating agent. Nonlimiting examples of suitable nucleating agent include talc, a carboxylate salt (e.g., sodium benzoate), a sorbitol acetal, a clarifier, a phosphate ester salt, an organic pigment and an inorganic pigment. Not wishing to bound by theory, the mixture of the carrier and the solidifier can facilitate solidification of the additives within the carrier located inside the pellet.

In an embodiment, the carrier is wax. In a further embodiment, the wax has a density greater than 0.94 g/cm³.

The carrier may comprise two or more embodiment described herein.

In an embodiment, the additive blend includes from 1 wt% to 99 wt% of two or more additives and from 1 wt% to 99 wt% of the carrier. Weight percentage is based on a total weight of the additive blend.

In an embodiment, the additive blend includes a peroxide, a catalyst, a silane, a metal deactivator, an antioxidant, a UV stabilizer, a voltage stabilizer, and combinations thereof. In a further embodiment, the additive blend includes the carrier.

In an embodiment, the additive blend includes from 60 wt%, or 70 wt%, or 80 wt% to 90 wt%, or 96 wt% silane; from 1 wt%, or 2 wt%, or 5 wt%, or 8 wt% to 10 wt%, or 15 wt%, or 20 wt% peroxide; and from 1 wt%, or 2 wt%, or 3 wt% to 4 wt%, or 5 wt%, or 8 wt% catalyst. In a further embodiment, the additive blend includes from 70 wt% to 96 wt% silane, from 1 wt% to 10 wt% peroxide, and from 1 wt% to 5 wt% catalyst.

In an embodiment, the additive blend includes a peroxide, a curing coagent, a flame retardant, a water tree retardant, an antioxidant, a UV stabilizer, a voltage stabilizer, and combinations thereof. In a further embodiment, the additive blend includes the carrier.

In an embodiment, the additive blend includes from 50 wt%, or 60 wt%, or 70 wt% to 80 wt%, or 90 wt% or 99 wt% carrier and from 50 wt%, or 40 wt%, or 30 wt% to 20 wt%, 10 wt%, or 1 wt% curing coagent. In a further embodiment, the additive blend includes from 50 to 99 wt%, or from 70 to 80 wt% carrier and from 50 to 1 wt%, or from 30 to 20 wt% curing coagent. Weight percentage is based on the total weight of the additive blend.

A portion of the additive or additive blend may or may not be absorbed into the body 20 through the channel 30. A portion of the additive or additive blend may or may not be adsorbed on the channel surface. In an embodiment, a portion of the additive is absorbed into the body 20 through the channel 30 and a portion of the additive (or additive blend) is adsorbed on the channel surface. The term "absorption," and derivatives thereof (*i.e*., "absorbed"), as used herein, is the assimilation of molecular species of the additive throughout the bulk (*i.e*., within), the body 20. The term "adsorption," and derivatives thereof (*i.e.*, "adsorbed"), as used herein, is the accumulation of the molecular species of the additive at the body surface rather than within the bulk of the body 20.

The additive may comprise two or more embodiment described herein.

### Pellet Dimensions

The pellet 10 has a channel diameter-to-body diameter (CBD) ratio. The term, "channel diameter-to-body diameter (or "CBD") ratio", as used herein, refers to the result obtained by dividing the channel diameter by the body diameter (i.e., the CBD is the quotient of the channel diameter and the body diameter). For example when the channel diameter is 2.0 mm and the body diameter is 7.0 mm, the CBD ratio is 0.29. In an embodiment, the CBD ratio is from 0.03, or 0.05, or 0.07, or 0.11 to 0.13, or 0.15, or 0.2, or 0.25, or 0.3, or 0.35, or 0.4, or 0.45, or 0.5. In a further embodiment, the CBD ratio is from 0.03 to 0.5, or from 0.05 to 0.45, or from 0.05 to 0.25, or from 0.05 to 0.15, or from 0.11 to 0.15.

FIG. 2B shows a length 35 for the body 20. In an embodiment, the length 35 is from 0.4 mm, or 0.8 mm, or 1 mm, or 1.2 mm, or 1.4 mm, or 1.5 mm, or 1.6 mm, or 1.7 mm to 1.9 mm, or 2 mm, or 2.2 mm, or 2.5 mm, or 3 mm, or 3.3 mm, or 3.5 mm, or 4 mm. In a further embodiment, the length 35 is from 0.4 to 4 mm, or from 0.8 to 3.5 mm, or from 1 to 3.5 mm, or from 1.4 to 2.5 mm, or from 1.5 to 1.9 mm.

In an embodiment: (i) the length 35 is from 0.4 mm, or 0.8 mm, or 1 mm, or 1.2 mm, or 1.4 mm, or 1.5 mm, or 1.6 mm, or 1.7 mm to 1.9 mm, or 2 mm, or 2.2 mm, or 2.5 mm, or 3 mm, or 3.3 mm, or 3.5 mm, or 4 mm; (ii) the body diameter 40 is from 0.7 millimeters (mm), or 0.8 mm, or 0.9 mm, or 1.0 mm, or 1.5 mm to 3.7 mm, or 4.0 mm, or 4.2 mm, or 4.6 mm, or 5.0 mm; and (iii) the channel diameter 45 is from 0.10 mm, or 0.13 mm, or 0.15 mm, or 0.18 mm to 0.3 mm, or 0.4 mm, or 0.5 mm, or 0.6 mm, or 0.8 mm or 1 mm, or 1.6 mm, or 1.8 mm. In a further embodiment: (i) the length 35 is from 0.4 to 4 mm, or from 0.8 to 3.5 mm, or from 1 to 3.5 mm, or from 1.4 to 2.5 mm, or from 1.5 to 1.9 mm; (ii) the body diameter 40 is from 0.7 to 5.0 mm, or from 0.8 to 4.2 mm, or from 1.0 to 4.0 mm; and (iii) the channel diameter 45 is from 0.10 to 1.8 mm, or from 0.15 to 1.6 mm, or from 0.18 to 1 mm, or from 0.18 to 0.8 mm, or from 0.18 to 0.6 mm.

Returning to FIG. 1B, a first face 55 of pellet 10 is shown. The first face 55 is located at the first end 15. A first orifice 50 is located in the center of the first face 55. The first orifice 50 is circular in shape, or generally circular in shape, and opens into the channel 30. The first orifice 50 has an area that is a function of the channel diameter 45. It is understood that the area of the first orifice 50 is a void space and the first orifice 50 does not have a surface. The first face 55 and the first orifice 50 form concentric circles that are bisected by the axis of symmetry A. The first face 55 has a surface that does not include the first orifice 50. In other words, the first face 55 has the shape of a flat ring.

A second orifice 60 is located in the center of a second face 65. The second orifice 60 is circular in shape, or generally circular in shape, and opens into the channel 30. The second orifice 60 has an area that is a function of the channel diameter 45. It is understood that the area of the second orifice 60 is a void space and the first orifice 60 does not have a surface. The second face 65 and the second orifice 60 form concentric circles that are bisected by the axis of symmetry A. The second face 65 has a surface that does not include the second orifice 60. In other words, the second face 65 has the shape of a flat ring.

The first face 55 has a "first surface area" that is the product of the expression (0.25 × π × [(the body diameter 40)² - (the channel diameter 45)²]). The second face 65 has a "second surface area" that is the product of the expression (0.25 × π × [(the body diameter 40)² - (the channel diameter 45)²]). The surface area of the first face 55 is equal to the surface area of the second face 65.

The body 20 has a body surface that includes a "facial surface." The facial surface includes the first face 55 and the second face 65. The facial surface has a "facial surface area" that is the sum of the surface area of the first face 55 and the surface area of the second face 65. The facial surface area is the product of the expression 2 × (0.25 × π × [(the body diameter 40)² - (the channel diameter 45)²]).

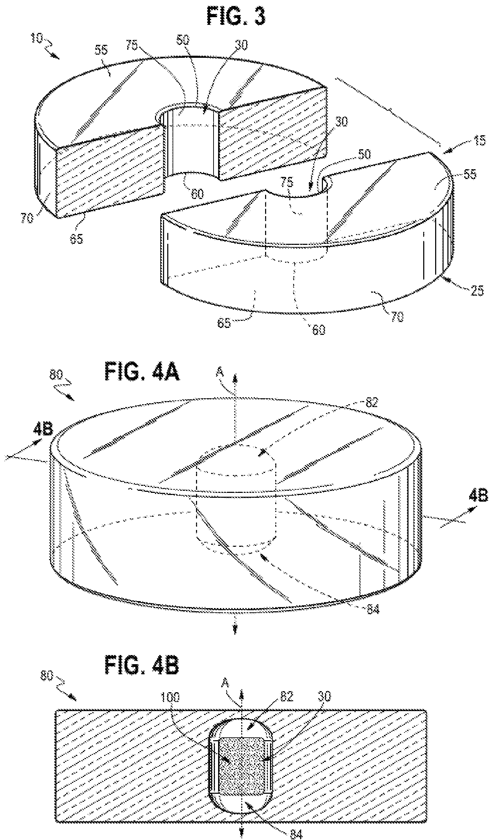

FIG. 3 shows a shell 70. The shell 70 is the outer surface of the body 20 that is parallel to the axis of symmetry A. Shell 70 has a cylindrical, or a generally cylindrical shape. Shell 70 includes a "shell surface" and a "shell surface area," the latter of which is the product of the expression (π × the body diameter 40 × the length 35). The body 20 has a "body surface" that includes the shell surface and the facial surface. The body surface has a "body surface area" that is the sum of the shell surface area and the facial surface area. In an embodiment, the body surface area is from 25 square millimeters (mm²), or 30 mm², or 32 mm², or 34 mm², or 35 mm² to 40 mm², or 45 mm², or 50 mm². In a further embodiment, the body surface area is from 25 to 50 mm², or from 30 to 45 mm², or from 35 to 40 mm².

The channel 30 has a channel surface 75 including a "channel surface area." The channel surface area is the product of the expression (π × the channel diameter 45 × the length 35). In an embodiment, the channel surface area is from 0.5 mm², or 1 mm², or 2 mm², or 3 mm² to 6 mm², to 7 mm², or 8 mm², or 9 mm², or 10 mm², or 11 mm². In a further embodiment, the channel surface area is from 0.5 to 11 mm², or from 1 to 9 mm², or from 1 to 8 mm², or from 2 to 8 mm².

The pellet 10 has a surface area that is the sum of the body surface area and the channel surface area. In an embodiment, the pellet surface area is from 4 mm², or 15 mm², or 25 mm², or 30 mm², or 35 mm² to 40 mm², or 45 mm², or 50 mm², or 60 mm², or 70 mm², or 80 mm². In a further embodiment, the pellet surface area is from 15 to 80 mm², or from 30 to 60 mm², or from 35 to 50 mm².

In an embodiment, (i) the length 35 is from 0.4 mm, or 0.8 mm, or 1 mm, or 1.2 mm, or 1.4 mm, or 1.5 mm, or 1.6 mm, or 1.7 mm to 1.9 mm, or 2 mm, or 2.2 mm, or 2.5 mm, or 3 mm, or 3.3 mm, or 3.5 mm, or 4 mm; (ii) the body diameter 40 is from 0.7 mm, or 0.8 mm, or 0.9 mm, or 1.0 mm, or 1.5 mm to 3.7 mm, or 4.0 mm, or 4.2 mm, or 4.6 mm, or 5.0 mm; (iii) the pellet surface area is from 4 mm², or 15 mm², or 25 mm², or 30 mm², or 35 mm² to 40 mm², or 45 mm², or 50 mm², or 60 mm², or 70 mm², or 80 mm² and (iv) the CBD ratio is from 0.03, or 0.05, or 0.07, or 0.11 to 0.13, or 0.15, or 0.2, or 0.25, or 0.3, or 0.35, or 0.4, or 0.45, or 0.5. In a further embodiment, (i) the length 35 is from 0.4 to 4 mm, or from 0.8 to 3.5 mm, or from 1 to 3.5 mm, or from 1.4 to 2.5 mm, or from 1.5 to 1.9 mm; (ii) the body diameter 40 is from 0.7 to 5.0 mm, or from 0.8 to 4.2 mm, or from 1.0 to 4.0 mm; (iii) the pellet surface area is from 15 to 80 mm², or from 30 to 60 mm², or from 35 to 50 mm² and (iv) the CBD ratio is from 0.03 to 0.5, or from 0.05 to 0.45, or from 0.05 to 0.25, or from 0.05 to 0.15, or from 0.11 to 0.15.

The term, "standard pellet," as used herein, refers to a pellet without a channel that is otherwise identical to the pellet 10 of the preset disclosure, i.e., the standard pellet has the same body diameter 40 and the same body length 35 as the pellet 10 and the standard pellet is made of the same polymeric material as the body 20 of the pellet 10. In an embodiment, the surface area of pellet 10 is greater than the surface area of a standard pellet. A ratio of the pellet surface area-to-standard pellet surface area is termed the "PSP ratio." In an embodiment the PSP ratio is from 1.02, or 1.03, or 1.05, or 1.07 to 1.09, or 1.1, or 1.11, or 1.12, or 1.15, or 1.2, or 1.4. In a further embodiment the PSP ratio is from 1.02 to 1.4, or from 1.05 to 1.15, or from 1.05 to 1.11.

The pellet 10 has an channel surface area-to-body surface area (CSBS) ratio. The term, "channel surface area-to-body surface area (or "CSBS") ratio", as used herein, refers to the result obtained by dividing the channel surface area by the body surface area (i.e., the CSBS is the quotient of the channel surface area by the body surface area). For example when the channel surface area is 2.0 mm² and the body surface area is 7.0 mm², the CSBS ratio is 0.29. In an embodiment, the CSBS ratio is from 0.02, or 0.03, or 0.06, or 0.10, or 0.13 to 0.15, or 0.18, or 0.21, or 0.23, or 0.25, or 0.3. In a further embodiment the CSBS ratio is from 0.02 to 0.3, or from 0.03 to 0.25, or from 0.03 to 0.23, or from 0.03 to 0.21, or from 0.03 to 0.18.

In an embodiment, (i) the length 35 is from 0.4 mm, or 0.8 mm, or 1 mm, or 1.2 mm, or 1.4 mm, or 1.5 mm, or 1.6 mm, or 1.7 mm to 1.9 mm, or 2 mm, or 2.2 mm, or 2.5 mm, or 3 mm, or 3.3 mm, or 3.5 mm, or 4 mm; (ii) the body diameter 40 is from 0.7 mm, or 0.8 mm, or 0.9 mm, or 1.0 mm, or 1.5 mm to 3.7 mm, or 4.0 mm, or 4.2 mm, or 4.6 mm, or 5.0 mm; (iii) the pellet surface area is from 4 mm², or 15 mm², or 25 mm², or 30 mm², or 35 mm² to 40 mm², or 45 mm², or 50 mm², or 60 mm², or 70 mm², or 80 mm² and (iv) the CSBS ratio is from 0.02, or 0.03, or 0.06, or 0.10, or 0.13 to 0.15, or 0.18, or 0.21, or 0.23, or 0.25, or 0.3. In a further embodiment, (i) the length 35 is from 0.4 to 4 mm, or from 0.8 to 3.5 mm, or from 1 to 3.5 mm, or from 1.4 to 2.5 mm, or from 1.5 to 1.9 mm; (ii) the body diameter 40 is from 0.7 to 5.0 mm, or from 0.8 to 4.2 mm, or from 1.0 to 4.0 mm; (iii) the pellet surface area is from 15 to 80 mm², or from 30 to 60 mm², or from 35 to 50 mm² and (iv) the CSBS ratio is from 0.02 to 0.3, or from 0.03 to 0.25, or from 0.03 to 0.23, or from 0.03 to 0.21, or from 0.03 to 0.18.

FIG. 1B shows that the first end 15 and the second end 25 are open ends.

FIGS. 4A-4B show a closed pellet 80. The closed pellet 80 includes a first closed end 82 and a second closed end 84. The remaining features of closed pellet 80 are identical to the features of the pellet 10, as described herein.

The body 20 is composed of a polymeric material. In an embodiment, the polymeric material is selected from the group consisting of ethylene-based polymer, olefin-based polymer (*i.e*., a polyolefin polyolefin), crosslinkable polyolefin, polyamide, polyimide, polyester, aromatic polyester, polyacrylonitrile, polycarbonate, polyethylene terephthalate, polysulfide, polysulfone, polyurethane, polyether, polystyrene, polythioether, polytetrafluoroethylene, polyvinyl chloride, phenol-formaldehyde resin, wax, hot melt adhesive, thermoplastic elastomer, thermoplastic polyurethane, rubber, aromatic vinyl polymer, aliphatic vinyl polymer, aromatic alkenyl polymer, and copolymer of the foregoing. In a further embodiment, the polymeric material is selected from an organic polymer, a propylene-based polymer, a thermoplastic polymer, a thermoset polymer, a polymer melt-blend, polymer blends thereof and combinations thereof.

In an embodiment, the polymeric material for body 20 is an ethylene homopolymer.

In an embodiment, the polymeric material for body 20 is an ethylene-based polymer. Non-limiting examples of an ethylene-based polymers include ethylene/α-olefin interpolymers and ethylene/α-olefin copolymers. In an embodiment, the α-olefins include C₃-C₂₀ α-olefins and C₃-C₈ α-olefins. In a further embodiment the α-olefins are linear, branched or cyclic. Nonlimiting examples of suitable α-olefins include propylene, 1-butene, 4-methyl-1-pentene, 1-pentene, 1-hexene, 1-heptene and 1-octene, 1-decene, 1-dodecene, 1-tetradecene, 1-hexadecene, and 1-octadecene. Nonlimiting examples of suitable cyclic α-olefins include cyclohexene and cyclopentene. Nonlimiting examples of suitable ethylene/α-olefin interpolymers include ethylene/propylene, ethylene/1-butene, ethylene/1-hexene, ethylene/1-octene, ethylene/propylene/1-octene, ethylene/propylene/1-butene, and ethylene/1-butene/1-octene.

In an embodiment, the ethylene-based polymer is an ethylene/α-olefin interpolymer. In an embodiment, the ethylene/α-olefin interpolymer has an α-olefin content from 1 wt%, or 5 wt%, or 10 wt%, or 15 wt%, or 20 wt%, or 25 wt% to 35 wt%, or 45 wt%, or 50 wt%. In a further embodiment, ethylene/α-olefin interpolymer has an α-olefin content of from 1 to 50 wt%, or from 5 to 45 wt%, or from 10 to 40 wt%. Weight percentage is based on a total weight of the interpolymer.

In an embodiment, the ethylene-based polymer is selected from low-density polyethylene (LDPE), linear-low-density polyethylene (LLDPE), very-low-density polyethylene (VLDPE), and combinations of two or more thereof.

In an embodiment, the ethylene-based polymer is an LDPE. In a further embodiment, the LDPE has a density of 0.92 g/cm³ and a melt index (I₂) of 2 g/10 min.

In an embodiment, the ethylene-based polymers is an LLDPE.

In an embodiment, the ethylene-based polymer is a blend of two or more ethylene-based polymers described herein. In a further embodiment, the ethylene-based polymers of the blend are blended by an in-reactor process or a post-reactor process.

The polymeric material may comprise two or more embodiments disclosed herein.

### Process

The present disclosure provides a process. The process includes forming a pellet in a melt state. The pellet has a body. The body has a first end and an opposing second end. The body is composed of a polymeric material. The body has a length and a body diameter. The pellet has a channel extending through the body from the first end to the second end. The process includes injecting an additive into the channel. The additive is in a fluid state. The process includes solidifying the pellet, and forming a loaded pellet having additive in the channel. The process comprises injecting an additive that is in a fluid state into the channel, the additive comprising a material having at least one C-Si-O group; and forming a loaded pellet with the material having at least one C-Si-O group in the channel, wherein the material having at least one C-Si-O group is a siloxane, wherein the siloxane is polydimethylsiloxane.

Formation of the pellet 10 occurs when the olefin-based polymer (which forms the body 20) is in a melt state. The term "melt state," as used herein, is the olefin-based polymer heated to a molten plastic condition. In other words, the olefin-based polymer in the melt state is extrudable, or otherwise is an extrudate that flows, or is otherwise flowable, through an extruder and/or a die plate. In an embodiment, the olefin-based polymer is an ethylene-based polymer in the melt state. In a further embodiment, the ethylene-based polymer in the melt state is an LDPE in the melt state.

The process includes injecting an additive into the channel 30. The additive can be any additive as previously disclosed herein. The additive is injected into the channel 30 (i) when the additive is in a fluid state and (ii) when the pellet is in the melt state. The term "fluid state," as used herein, is the additive flows, or otherwise the additive is in a flowable condition.

The process includes solidifying the pellet and the additive to form a loaded pellet. The loaded (and solidified) pellet contains the additive in the channel 30. The additive present in the channel of the loaded pellet may be in the liquid state or may be a solid.

In an embodiment, solidification includes cooling the olefin-based polymer of the body, that is in the melt state, from an elevated temperature to ambient conditions (room temperature).

The process includes forming a loaded pellet. The term, "loaded pellet," as used herein, refers to a pellet (a hollow pellet), having a quantity of additive located in channel 30. In an embodiment, the additive adheres to the channel surface, such that the additive is retained in-and does not flow freely from- the channel 30.

In an embodiment, the process includes cutting the pellet in the melt state as an extrudate exiting an extruder die plate and into an underwater bath to cool and solidify the pellet and the additive and form the loaded pellet.

The process includes injecting an additive into the channel. The additive is in a fluid state. The additive includes a material having at least one C-Si-O group, wherein the material having at least one C-Si-O group is a siloxane, wherein the siloxane is polydimethylsiloxane. The process includes forming a loaded pellet with the material having at least one C-Si-O group in the channel.

In an embodiment, the additive is an additive blend that includes (i) one or more additives and (ii) a carrier. The carrier is a polyolefin, (such as an ethylene-based polymer, for example).

In an embodiment, the additive is an additive blend including from 60 wt%, or 70 wt%, or 80 wt% to 90 wt%, or 96 wt% silane; from 1 wt%, or 2 wt%, or 5 wt%, or 8 wt% to 10 wt%, or 15 wt%, or 20 wt% peroxide; and from 1 wt%, or 2 wt%, or 3 wt% to 4 wt%, or 5 wt%, or 8 wt% catalyst. In a further embodiment, the additive is an additive blend including from 70 wt% to 96 wt% silane, from 1 wt% to 10 wt% peroxide, and from 1 wt% to 5 wt% catalyst. Weight percentage is based on the total weight of the additive blend.

In an embodiment, the additive is an additive blend including from 50 wt%, or 60 wt%, or 70 wt% to 80 wt%, or 90 wt% or 99 wt% carrier and from 50 wt%, or 40 wt%, or 30 wt% to 20 wt%, 10 wt%, or 1 wt% curing coagent. In a further embodiment, the additive is an additive blend including from 50 to 99 wt%, or from 70 to 80 wt% carrier and from 50 to 1 wt%, or from 30 to 20 wt% curing coagent. Weight percentage is based on the total weight of the additive blend.

The additive blend, (e.g., the additive blend of carrier with silane, peroxide and catalyst dispersed therein), is in a fluid state when injected into the channel 30. In other words, the blend of carrier with silane, peroxide and catalyst dispersed therein is in a molten plastic condition when injected into the channel 30.

In an embodiment, the body has a length and a diameter (body diameter), and the channel has a channel diameter as disclosed above. The process includes forming a loaded pellet having a channel diameter-to-body diameter ratio from 0.05 to 0.15.

In an embodiment, the process includes forming a loaded pellet (with silane in the channel 30) having at least one closed end. In a further embodiment, the process includes forming a loaded pellet (with silane in the channel) having two closed ends.

In an embodiment, the pellet 10 is produced as disclosed in co-pending application WO 2020/198921 A1 (attorney docket No. 82430-WO-PCT).

By way of example, and not limitation, some embodiments of the present disclosure will now be described in detail in the following Examples.

### EXAMPLES

The raw materials used to formulate the Inventive Examples ("IE") are provided in Table 1 below.

**Table 1**

| Trade Name | Chemical Class and Description | Supplier |
|---|---|---|
| XUS 38658.00 | Ethylene/octene copolymer | The Dow Chemical Company |
| | Density: 0.904 g/cm³ | |
| | Ml: 30 g/10 min @ 190°C/2.16 kg | |
| XUS 38660.00 | Ethylene/octene copolymer | The Dow Chemical Company |
| | Density: 0.874 g/cm³ | |
| | MI: 4.8 g/10 min @ 190°C/2.16 kg | |
| AFFINITY GA 1950 | Polyoelfin plastomer | The Dow Chemical Company |
| | Density: 0.874 g/cm³ | |
| | Viscosity: 17 Pa·s @ 177°C | |
| DOW CORNING 200 Silicone Oil | Polydimethylsiloxane Fluid | The Dow Chemical Company |
| | Kinematic viscosity: 12,500 cSt @ 25°C | |

Comparative Sample 1 (CS-1) and Inventive Examples 1-8 (IE-1 to IE-8) are produced with XUS 38658.00 as the extrudate and the process conditions listed in Table 2. The extrusion process uses a Coperion ZSK-26 twin-screw extruder and a loss-in-weight feeder (K-Tron model KCLQX3). The fluid 50 (e.g., air or N₂) is injected into the extrudate using the die assembly disclosed in co-pending application WO 2020/198921 A1 (attorney docket No. 82430-WO-PCT). A Gala underwater rotating blade apparatus forms the pellets. The extruder is equipped with 26 millimeter (mm) diameter twin-screws and 11 barrel segments, 10 of which are independently controlled with electric heating and water cooling. The length to diameter ratio of the extruder is 44:1. A light-intensity screw design is used in order to minimize the shear heating of polymer melt.

Fluid-filled pellets (IE-1 to IE-8) are produced with injection of nitrogen gas into the extrudate as listed in Table 3. IE-1 through IE-6 are produced using a nitrogen flow rate of 10 mL/min and a nitrogen pressure between 34 kPag (5 psig) and 410 kPag (60 psig). IE-7 and IE-8 are produced using a nitrogen flow rate of 50 mL/min and a nitrogen pressure of 69 kPag (10 psig).

**Table 2**

| Sample ID | CS-1 | IE-1 | IE-2 | IE-3 | IE-4 | IE-5 | IE-6 | IE-7 | IE-8 |
|---|---|---|---|---|---|---|---|---|---|
| Pellet feed rate (kg/h) | 11.3 | 11.3 | 11.3 | 11.3 | 11.3 | 11.3 | 11.3 | 9.07 | 9.07 |
| N₂ Flow Rate (mL/min) | 0.0 | 10.0 | 10.0 | 10.0 | 10.0 | 10.0 | 10.0 | 50.0 | 50.0 |
| N₂ Pressure (kPag) | 0.0 | 34 | 34 | 205 | 205 | 410 | 410 | 69 | 69 |
| Screw RPM | 200 | 200 | 200 | 200 | 200 | 200 | 200 | 150 | 150 |
| Zone #1 (°C) | 99 | 99 | 99 | 99 | 99 | 99 | 99 | 75 | 75 |
| Zone #2 (°C) | 164 | 164 | 164 | 164 | 164 | 164 | 164 | 147 | 147 |
| Zone #3 (°C) | 179 | 179 | 179 | 179 | 179 | 179 | 179 | 160 | 160 |
| Zone #4 (°C) | 180 | 180 | 180 | 180 | 180 | 180 | 180 | 160 | 160 |
| Zone #5 (°C) | 179 | 179 | 179 | 179 | 179 | 179 | 179 | 160 | 160 |
| Zone #6 (°C) | 179 | 179 | 179 | 179 | 179 | 179 | 179 | 160 | 160 |
| Zone #7 (°C) | 179 | 179 | 179 | 179 | 179 | 179 | 179 | 160 | 160 |
| Zone #8 (°C) | 179 | 179 | 179 | 179 | 179 | 179 | 179 | 160 | 160 |
| Zone #9 (°C) | 179 | 179 | 179 | 179 | 179 | 179 | 179 | 160 | 160 |
| Zone #10 (°C) | 180 | 180 | 180 | 180 | 180 | 180 | 180 | 167 | 167 |
| Torque (%) | 40 | 40 | 40 | 40 | 40 | 40 | 40 | 49 | 49 |
| Die pressure (kPag) | 4902 | 4902 | 4902 | 4902 | 4902 | 4902 | 4902 | 6900 | 6900 |
| Diverter Valve (°C) | 180 | 180 | 180 | 180 | 180 | 180 | 180 | 160 | 160 |
| Die Temp (°C) | 220 | 220 | 220 | 220 | 220 | 220 | 220 | 150 | 150 |
| Water Temp (°C) | 16 | 16 | 16 | 16 | 16 | 16 | 16 | 4.4 | 4.4 |
| Pellet End Type | Closed | Open | Open | Open | Open | Open | Open | Open | Open |

The dimensions of the pellets formed from process conditions IE-1 to IE-8 from Table 2 are imaged with optical microscopy. The results of the optical microscopy of pellets IE-1 to IE-8 are listed in Table 3.

**Table 3**

| Sample ID | Channel Diameter (mm) | Body Diameter (mm) | Pellet Length (mm) | Body S.A. (mm²) | Channel S.A. (mm²) | Pellet S.A. (mm²) | CBD Ratio | CSBS Ratio |
|---|---|---|---|---|---|---|---|---|
| IE-1 | 0.18 | 3.33 | 1.8 | 36.2 | 1.02 | 37.2 | 0.054 | 0.03 |
| IE-2 | 0.37 | 3.22 | 1.8 | 34.3 | 2.09 | 36.4 | 0.11 | 0.06 |
| IE-3 | 0.82 | 3.34 | 1.8 | 35.3 | 4.63 | 40.0 | 0.25 | 0.13 |
| IE-4 | 0.39 | 3.51 | 1.8 | 38.9 | 2.20 | 41.2 | 0.11 | 0.06 |
| IE-5 | 0.63 | 3.35 | 1.8 | 35.9 | 3.56 | 39.5 | 0.19 | 0.10 |
| IE-6 | 0.55 | 3.57 | 1.8 | 39.7 | 3.11 | 42.8 | 0.15 | 0.08 |
| IE-7 | 0.99 | 3.56 | 1.8 | 38.5 | 5.60 | 44.0 | 0.28 | 0.15 |
| IE-8 | 1.52 | 3.79 | 1.8 | 40.4 | 8.59 | 48.9 | 0.40 | 0.21 |
| CBD is ratio of channel diameter to body diameter | | | | | | | | |
| CSBS is ratio of channel surface area to body surface area | | | | | | | | |
| S.A. is surface area | | | | | | | | |

Inventive Examples 9-20 (IE-9 to IE-20) are produced with the extrusion process conditions listed in Table 4 below. IE-9 to IE-20 are produced using the same process described above with the exception that an additive - silicone oil - is injected into the extrudate using the die assembly disclosed in co-pending application WO 2020/198921 A1 (attorney docket No. 82430-WO-PCT). The silicone oil is injected at the pressures listed in Table 4 to produce loaded pellets.

**Table 4**

| Sample ID | Composition (wt%)* | | | | Die Temp (°C) | Pressure (kPag) | Pellet End Type | |
|---|---|---|---|---|---|---|---|---|
| | XUS 38658.00 | AFFINITY GA 1950 | Silicone Oil | Total | | | Downstream | Upstream |
| IE-9 | 98.5 | 0 | 1.5 | 100 | 180 | < 172 | Open | |
| IE-10 | 98.5 | 0 | 1.5 | 100 | 180 | < 172 | | Open |
| IE-11 | 49.3 | 49.25 | 1.5 | 100 | 180 | 62 | Open | |
| IE-12 | 49.3 | 49.25 | 1.5 | 100 | 180 | 62 | | Closed |
| IE-13 | 47.5 | 47.5 | 5 | 100 | 180 | 152 | Open | |
| IE-14 | 47.5 | 47.5 | 5 | 100 | 180 | 152 | | Closed |
| IE-15 | 0 | 98.5 | 1.5 | 100 | 140 | 62 | Closed | |
| IE-16 | 0 | 98.5 | 1.5 | 100 | 140 | 62 | | Closed |
| IE-17 | 0 | 97 | 3 | 100 | 140 | 103 | Closed | |
| IE-18 | 0 | 97 | 3 | 100 | 140 | 103 | | Closed |
| IE-19 | 0 | 95 | 5 | 100 | 140 | 152 | Closed | |
| IE-20 | 0 | 95 | 5 | 100 | 140 | 152 | | Closed |
| * weight percentage based on total weight of loaded pellet | | | | | | | | |

The dimensions of the loaded pellets (with the additive silicone oil in the channel), formed from process conditions IE-9 to IE-20 from Table 4 are imaged with optical microscopy. The results of the optical microscopy of loaded pellets IE-9 to IE-20 are listed in Table 5 below.

**Table 5**

| | IE-9 | IE-10 | IE-11 | IE-12 | IE-13 | IE-14 | IE-15 | IE-16 | IE-17 | IE-18 | IE-19 | IE-20 |
|---|---|---|---|---|---|---|---|---|---|---|---|---|
| Pellet Length (mm) | 1.80 | 1.80 | 1.80 | 1.80 | 1.80 | 1.80 | 1.80 | 1.80 | 1.80 | 1.80 | 1.80 | 1.80 |
| Body diameter (mm) | 3.19 | 3.23 | 3.44 | 3.86 | 3.55 | 3.26 | 4.18 | 4.29 | 4.57 | 4.07 | 4.29 | 4.02 |
| Channel diameter (mm) | 0.42 | 0.53 | 0.26 | 0.48 | 0.48 | 0.48 | 0.56 | 0.61 | 0.72 | 0.72 | 0.75 | 0.80 |
| CBD Ratio | 0.13 | 0.16 | 0.08 | 0.12 | 0.14 | 0.15 | 0.13 | 0.14 | 0.16 | 0.18 | 0.17 | 0.20 |
| Body S.A. (mm²) | 33.7 | 34.2 | 37.9 | 44.9 | 39.5 | 34.8 | 50.6 | 52.6 | 57.8 | 48.2 | 52.3 | 47.1 |
| Channel S.A. (mm²) | 2.37 | 3.00 | 1.47 | 2.71 | 2.71 | 2.71 | 3.17 | 3.45 | 4.07 | 4.07 | 4.24 | 4.52 |
| CSBS ratio | 0.07 | 0.09 | 0.04 | 0.06 | 0.07 | 0.08 | 0.06 | 0.07 | 0.07 | 0.08 | 0.08 | 0.10 |
| Pellet S.A. (mm²) | 36.1 | 37.2 | 39.4 | 47.6 | 42.2 | 37.5 | 53.7 | 56.1 | 61.9 | 52.3 | 56.5 | 51.6 |
| S.A. = surface area | | | | | | | | | | | | |

## Claims

1. A pellet comprising:
a body having a first end and an opposing second end, the body composed of a polymeric material, the body having a length and a body diameter;
a channel having a channel diameter, the channel extending through the body from the first end to the second end; and
an additive in the channel; wherein the additive comprises a material having at least one C-Si-O group, wherein the material having at least one C-Si-O group is a siloxane,
wherein the siloxane is polydimethylsiloxane.

2. The pellet of claim 1 wherein the additive further comprises a peroxide.

3. The pellet of any of claims 1-2 wherein the additive further comprises triallyl isocyanurate (TAlC).

4. The pellet of any of claims 1-2 wherein the additive further comprises a silane.

5. The pellet of any of claims 1-4 wherein
each end has a respective orifice and a respective face;
the body has a surface comprising a shell and a facial surface, the body surface having a body surface area comprising a shell surface area and a facial surface area; and
the body surface area is from 25 square millimeters (mm²) to 50 mm².

6. The pellet of any of claims 1-5, wherein the channel diameter is from 0.18 millimeters (mm) to 1 mm.

7. The pellet of any of claims 1-6, wherein the length is from 1.5 mm to 1.9 mm and the body diameter is from 0.8 mm to 4.2 mm.

8. The pellet of any of claims 1-7 wherein at least one of the ends is closed.

9. The pellet of any of claims 1-8 wherein each end is closed.

10. The pellet of any of claims 1-9 wherein the body is composed from a polymeric material selected from the group consisting of polyolefin, crosslinkable polyolefin, polyamide, polyimide, polyester, polycarbonate, polysulfide, polysulfone, polyurethane, polyether, polythioether, wax, hot melt adhesive, thermoplastic elastomer, rubbers, aromatic vinyl polymer, aliphatic vinyl polymer, aromatic alkenyl polymer, and copolymer of the foregoing.

11. A process comprising:
forming a pellet in a melt state, the pellet having a body, the body having a first end and an opposing second end, the body composed of a polymeric material, the body having a length and a body diameter, the pellet having a channel extending through the body from the first end to the second end;
injecting an additive into the channel, the additive in a fluid state;
solidifying the pellet; and
forming a loaded pellet comprising the additive in the channel;
wherein theprocess comprises
injecting an additive that is in a fluid state into the channel, the additive comprising a material having at least one C-Si-O group; and
forming a loaded pellet with the material having at least one C-Si-O group in the channel,
wherein the material having at least one C-Si-O group is a siloxane, wherein the siloxane is polydimethylsiloxane.

12. The process of claim 11 wherein the body has a body surface comprising a shell and a facial surface, the body surface having a body surface area comprising a shell surface area and a facial surface area,
the process comprising
forming a loaded pellet having a body surface area from 25 mm² to 50 mm².

13. The process of any of claims 11-12 comprising
forming a loaded pellet having at least one closed end.

## Patentansprüche

1. Pellet, umfassend:
einen Körper, der ein erstes Ende und ein gegenüberliegendes zweites Ende aufweist, wobei der Körper aus einem Polymermaterial besteht, wobei der Körper eine Länge und einen Körperdurchmesser aufweist,
einen Kanal, der einen Kanaldurchmesser aufweist, wobei sich der Kanal von dem ersten Ende zu dem zweiten Ende durch den Körper erstreckt; und
ein Additiv in dem Kanal; wobei das Additiv ein Material umfasst, das mindestens eine C-Si-O-Gruppe aufweist, wobei das Material, das mindestens eine C-Si-O-Gruppe aufweist, ein Siloxan ist, wobei das Siloxan Polydimethylsiloxan ist.

2. Pellet nach Anspruch 1, wobei das Additiv ferner ein Peroxid umfasst.

3. Pellet nach einem der Ansprüche 1 bis 2, wobei das Additiv ferner Triallylisocyanurat (TAIC) umfasst.

4. Pellet nach einem der Ansprüche 1 bis 2, wobei das Additiv ferner ein Silan umfasst.

5. Pellet nach einem der Ansprüche 1 bis 4, wobei
jedes Ende eine jeweilige Öffnung und eine jeweilige Fläche aufweist,
der Körper eine Oberfläche, umfassend eine Schalen- und eine Stirnoberfläche, aufweist, wobei die Körperoberfläche einen Körperoberflächenbereich, umfassend einen Schalenoberflächenbereich und einen Stirnoberflächenbereich, aufweist, und
der Körperoberflächenbereich von 25 Quadratmillimeter (mm²) bis 50 mm² beträgt.

6. Pellet nach einem der Ansprüche 1 bis 5, wobei der Kanaldurchmesser von 0,18 Millimeter (mm) bis 1 mm beträgt.

7. Pellet nach einem der Ansprüche 1 bis 6, wobei die Länge von 1,5 mm bis 1,9 mm und der Körperdurchmesser von 0,8 mm bis 4,2 mm beträgt.

8. Pellet nach einem der Ansprüche 1 bis 7, wobei mindestens eines der Enden geschlossen ist.

9. Pellet nach einem der Ansprüche 1 bis 8, wobei jedes Ende geschlossen ist.

10. Pellet nach einem der Ansprüche 1 bis 9, wobei der Körper aus einem Polymermaterial besteht, das aus der Gruppe ausgewählt ist, bestehend aus Polyolefin, vernetzbarem Polyolefin, Polyamid, Polyimid, Polyester, Polycarbonat, Polysulfid, Polysulfon, Polyurethan, Polyether, Polythioether, Wachs, Schmelzklebstoff, thermoplastischem Elastomer, Kautschuken, aromatischem Vinylpolymer, aliphatischem Vinylpolymer, aromatischem Alkenylpolymer und Copolymer der Vorstehenden.

11. Verfahren, umfassend:
Ausbilden eines Pellets in einem Schmelzzustand, wobei das Pellet einen Körper aufweist, der Körper ein erstes Ende und ein gegenüberliegendes zweites Ende aufweist, der Körper aus einem Polymermaterial besteht, der Körper eine Länge und einen Körperdurchmesser aufweist, das Pellet einen Kanal aufweist, der sich von dem ersten Ende zu dem zweiten Ende durch den Körper erstreckt;
Injizieren eines Additivs in den Kanal, wobei das Additiv in einem fluiden Zustand ist;
Verfestigen des Pellets, und
Ausbilden eines beladenen Pellets, umfassend das Additiv in dem Kanal;
wobei das Verfahren umfasst
Injizieren eines Additivs, das in einem fluiden Zustand ist, in den Kanal, das Additiv umfassend ein Material, das mindestens eine C-Si-O-Gruppe aufweist, und
Ausbilden eines beladenen Pellets mit dem Material, das mindestens eine C-Si-O-Gruppe in dem Kanal aufweist,
wobei das Material mindestens eine C-Si-O-Gruppe aufweist, die ein Siloxan ist, wobei das Siloxan Polydimethylsiloxan ist.

12. Verfahren nach Anspruch 11, wobei der Körper eine Körperoberfläche, umfassend eine Schale und eine Stirnoberfläche, aufweist, wobei die Körperoberfläche einen Körperoberflächenbereich, umfassend einen Schalenoberflächenbereich und einen Stirnoberflächenbereich, aufweist,
das Verfahren umfassend
Ausbilden eines beladenen Pellets, das einen Körperoberflächenbereich von 25 mm² bis 50 mm² aufweist.

13. Verfahren nach einem der Ansprüche 11 bis 12, umfassend
Ausbilden eines beladenen Pellets, das mindestens ein geschlossenes Ende aufweist.

## Revendications

1. Granulé comprenant :
un corps ayant une première extrémité et une seconde extrémité opposée, le corps étant composé d'un matériau polymère, le corps ayant une longueur et un diamètre de corps ;
un canal ayant un diamètre de canal, le canal s'étendant à travers le corps de la première extrémité à la seconde extrémité ; et
un additif dans le canal ; dans lequel l'additif comprend un matériau ayant au moins un groupe C-Si-O, dans lequel le matériau ayant au moins un groupe C-Si-O est un siloxane, dans lequel le siloxane est un polydiméthylsiloxane.

2. Granulé selon la revendication 1, dans lequel l'additif comprend en outre un peroxyde.

3. Granulé selon l'une quelconque des revendications 1 et 2, dans lequel l'additif comprend en outre de l'isocyanurate de triallyle (TAlC).

4. Granulé selon l'une quelconque des revendications 1 et 2, dans lequel l'additif comprend en outre un silane.

5. Granulé selon l'une quelconque des revendications 1 à 4, dans lequel
chaque extrémité a un orifice respectif et une face respective ;
le corps a une surface comprenant une enveloppe et une surface faciale, la surface de corps ayant une aire de corps comprenant une aire d'enveloppe et une aire faciale ; et
l'aire de corps fait de 25 millimètres carrés (mm²) à 50 mm².

6. Granulé selon l'une quelconque des revendications 1 à 5, dans lequel le diamètre de canal fait de 0,18 millimètre (mm) à 1 mm.

7. Granulé selon l'une quelconque des revendications 1 à 6, dans lequel la longueur fait de 1,5 mm à 1,9 mm et le diamètre de corps fait de 0,8 mm à 4,2 mm.

8. Granulé selon l'une quelconque des revendications 1 à 7, dans lequel au moins une des extrémités est fermée.

9. Granulé selon l'une quelconque des revendications 1 à 8, dans lequel chaque extrémité est fermée.

10. Granulé selon l'une quelconque des revendications 1 à 9, dans lequel le corps est composé d'un matériau polymère choisi dans le groupe constitué de polyoléfine, polyoléfine réticulable, polyamide, polyimide, polyester, polycarbonate, polysulfure, polysulfone, polyuréthane, polyéther, polythioéther, cire, adhésif thermofusible, élastomère thermoplastique, caoutchoucs, polymère vinylique aromatique, polymère vinylique aliphatique, polymère alcényle aromatique, et copolymère de ceux-ci.

11. Procédé comprenant :
la formation d'un granulé à l'état fondu, le granulé ayant un corps, le corps ayant une première extrémité et une seconde extrémité opposée, le corps étant composé d'un matériau polymère, le corps ayant une longueur et un diamètre de corps, le granulé ayant un canal s'étendant à travers le corps de la première extrémité à la seconde extrémité ;
l'injection d'un additif dans le canal, l'additif étant à l'état fluide ;
la solidification du granulé ; et
la formation d'un granulé chargé comprenant l'additif dans le canal ;
dans lequel le procédé comprend
l'injection d'un additif qui est à l'état fluide dans le canal, l'additif comprenant un matériau ayant au moins un groupe C-Si-O ; et
la formation d'un granulé chargé avec le matériau ayant au moins un groupe C-Si-O dans le canal,
dans lequel le matériau ayant au moins un groupe C-Si-O est un siloxane, dans lequel le siloxane est un polydiméthylsiloxane.

12. Procédé selon la revendication 11, dans lequel le corps a une surface de corps comprenant une enveloppe et une surface faciale, la surface de corps ayant une aire de corps comprenant une aire d'enveloppe et une aire faciale,
le procédé comprenant
la formation d'une pastille chargée ayant une aire de corps faisant de 25 mm² à 50 mm².

13. Procédé selon l'une quelconque des revendications 11 et 12, comprenant
la formation d'un granulé chargé ayant au moins une extrémité fermée.
